# EUROPÄISCHE PATENTSCHRIFT

(11) **EP 0 677 484 B1**
(45) Veröffentlichungstag und Bekanntmachung des Hinweises auf die Patenterteilung: **21.03.2001**
(21) Anmeldenummer: 95105665.4
(22) Anmeldetag: 13.04.1995
(51) Int. Cl.: C02F 3/12, C02F 3/34, C02F 1/44, C05F 17/00, C05F 17/02, B01D 53/85

(54) **Verfahren und Vorrichtung zur Reinigung von Wasser, insbesondere aus einem Kompostierungsprozess**
Process and apparatus for purification of water originating particularly from a compost formation process
Procédé et dispositif pour la purification d'eau provenant particulièrement d'un procédé de compostage

(30) Priorität: 14.04.1994 DE 4412890
(43) Veröffentlichungstag der Anmeldung: 18.10.1995
(73) Patentinhaber: HERHOF UMWELTTECHNIK GmbH, D-35606 Solms-Niederbiel (DE)
(72) Erfinder: Schnorr, Karl-Ernst, D-35633 Lahnau (DE); Claudy, Markus, D-35606 Solms (DE)
(74) Vertreter: Zinnecker, Armin, Dipl.-Ing.

(56) Entgegenhaltungen:
- CH-A- 645 333
- DE-A- 3 811 399
- DE-A- 4 024 947
- DE-A- 4 224 544
- FR-A- 2 684 094
- US-A- 3 472 765
- DATABASE WPI Week 8838 Derwent Publications Ltd., London, GB; AN 88-268757 & JP-A-63 197 597 (MITSUBISHI HEAVY IND KK) , 16.August 1988
- PATENT ABSTRACTS OF JAPAN vol. 12 no. 110 (C-486) [2957] ,8.April 1988 & JP-A-62 237988 (TAMURA SEISAKUSHO CO LTD) 17.Oktober 1987,

## Beschreibung

Die Erfindung betrifft ein Verfahren zur Kompostierung organischer Stoffe und eine Vorrichtung zur Durchführung dieses Verfahrens.

Aus der DE-C-36 37 393, der DE-A-38 11 399 und der DE-A-25 41 070 sind Kompostierungsverfahren bekannt, bei denen organische Stoffe, insbesondere Abfälle, die organische Stoffe enthalten ("Bioabfälle"), kompostiert werden. Insbesondere beschreibt die DE-C-36 37 393 ein Verfahren und eine Vorrichtung, bei denen organische Stoffe in einem geschlossenen Behälter unter Zwangsbelüftung kompostiert werden.

Bei den vorbekannten Kompostierungsverfahren erfolgt eine Abluftreinigung, bei der Wasser anfällt, da bei Unterschreitung des Taupunktes an kühleren Flächen der in der Luft mitgeführte, aus der biologischen Reaktion bzw. Umsetzung stammende Wasserdampf auskondensiert.

Die Kompostierung von Küchen- und Gartenabfällen aus der Müll-Getrenntsammlung führt zur Freisetzung von erheblichen Wassermengen. Wenn die warme Abluft so weit abgekühlt wird, daß keine Gerüche in die Atmosphäre gelangen, fällt Kondensat an. Bisher wurde die Abluft aus biologischen Prozessen, insbesondere aus Kompostierungsprozessen, zur Reduzierung der Geruchtsfrachten über Biofilter geleitet, wobei die Feuchtigkeit weitgehend abgeschieden wurde, was zur Folge hatte, daß die Filter von der Zuführungsseite her versotteten. Die dabei anfallende, schwierig zu entsorgende Flüssigkeit (auch als "Sickerwasser" bezeichnet) war aufgrund des Kontaktes mit der Biomasse hochbelastet und hatte somit einen sehr hohen Sauerstoffbedarf (CSB - ca. 40.000 bis 80.000 mg O₂/l). In der Folge der technischen Entwicklung wurden den Filtern Kühlfallen oder Wäscher vorgeschaltet, so daß die Flüssigkeit nicht mehr mit der Biomasse in Berührung kam, um den CSB-Wert und den BSB-Wert des Kondensates zu reduzieren. Die hierbei entstehenden CSB-Werte lagen nun bei etwa 5.000 mg O₂/l. Auch dieser Wert ist allerdings noch verbesserungsbedürftig.

Aus der US-A-3 472 765 ist ein Verfahren zur Reinigung von Wasser bekannt, bei dem das Wasser in einem Bioreaktor gereinigt wird und bei dem das derart gereinigte Wasser einem Membranfilter zugeführt wird, in dem es filtriert, beispielsweise ultrafiltriert wird.

Die CH-A-645 333 offenbart ein Verfahren zum Feuchtkompostieren von organischen Abfallstoffen, z.B. von Klärschlamm, das in einem Reaktorbehälter unter Zuführung von Sauerstoff durchgeführt wird und bei dem das aus den Abfallstoffen austretende Gas in einem Kreislauf wieder in die Abfallstoffe zurückgeführt wird. Vor dieser Rückführung wird das Gas entwässert und das anfallende Wasser dem Kreislauf entzogen. Das bei der Entwässerung des Gases anfallende Wasser kann in das Rohabwasser einer Kläranlage eingeleitet werden.

Aufgabe der Erfindung ist es, bei einem Verfahren und einer Vorrichtung zur Kompostierung organischer Stoffe, bei dem das als Kondensat entstehende Wasser gereinigt wird, die Reinigungswirkung zu verbessern.

Erfindungsgemäß wird diese Aufgabe durch die Merkmale des Anspruchs 1 gelöst. Die Erfindung betrifft ein Verfahren zur Kompostierung organischer Stoffe, insbesondere zur Kompostierung von Abfällen, die organische Stoffe enthalten ("Bioabfälle"). Die Kompostierung wird vorzugsweise in einem geschlossenen Behälter unter Zwangsbelüftung durchgeführt. Die organischen Stoffe werden kompostiert. Das dabei als Kondensat entstehende Wasser wird in einem Bioreaktor, gereinigt, wobei das Wasser in dem Bioreaktor mit Sauerstoff, vorzugsweise Luftsauerstoff, begast wird. Das derart gereinigte Wasser wird ultrafiltriert, beispielsweise in einem Ultrafiltrationsmodul.

Die den Sauerstoffbedarf bestimmenden Inhaltsstoffe des zu reinigenden Wassers werden gemessen. Die aus dem Wasser abzuscheidenden Wasser-Inhaltsstoffe werden festgelegt. Dies geschieht vorzugsweise aufgrund der Messung der den Sauerstoffbedarf bestimmenden Inhaltsstoffe des zu reinigenden Wassers. Die Steuerung der Stoffwechselfunktionen im Bioreaktor erfolgt durch Nährstoffeintragung. Durch das erfindungsgemäße Verfahren kann die Zusammensetzung des zu reinigenden Wassers derart verändert werden, daß ein biologischer Klärprozeß möglich ist.

Vorteilhafte Weiterbildungen sind in den Unteransprüchen beschrieben.

Vorzugsweise erfolgt die Steuerung der Stoffwechselfunktionen im Bioreaktor durch Sauerstoffeintrag, insbesondere Luftsauerstoffeintrag, und/oder durch pH-Wert-Regelung und/oder durch Temperaturregelung.

Vorzugsweise wird das Wasser in dem Bioreaktor umgerührt.

Eine weitere vorteilhafte Weiterbildung ist dadurch gekennzeichnet, daß man durch Animpfen des zu reinigenden Wassers den Verlauf der Stoffwechselfunktionen der eingebrachten Mikroorganismen feststellt. Danach können die einzelnen Substratparameter (beispielsweise Sauerstoff, Kohlenstoff, Stickstoff, Phosphor, der pH-Wert und/oder die Temperatur) und die daraus resultierenden Änderungen der Stoffwechselfunktionen ermittelt werden. Vorzugsweise werden die festgelegten Wasserinhaltsstoffe aus dem Wasser ausgefiltert.

Vorzugsweise erfolgt die Steuerung der Filterleistung, insbesondere der Membranfilterleistung, durch Druckregelung und/oder Regelung der Überströmgeschwindigkeit.

Vorzugsweise wird die Abluft des Bioreaktors in den Lüftungskreislauf der Kompostierung zurückgeführt. Die Abluft des Bioreaktors entsteht insbesondere durch die Begasung des Bioreaktors mit Sauerstoff bzw. Luftsauerstoff.

Nach einer weiteren vorteilhaften Weiterbildung wird der Überschußschlamm, der sich - insbesondere in dem Bioreaktor - ansammelt, kompostiert. Vorzugsweise wird dieser Überschußschlamm zusammen mit den zu kompostierenden Stoffen kompostiert.

Die Erfindung betrifft ferner eine Vorrichtung zur Durchführung des erfindungsgemäßen Verfahrens zur Kompostierung organischer Stoffe. Zur Lösung der oben angegebenen Aufgabe ist eine derartige Vorrichtung erfindungsgemäß gekennzeichnet durch einen Behälter, insbesondere einen geschlossenen Behälter mit Zwangsbelüftung, zur Kompostierung organischer Stoffe, einen Bioreaktor, zur Reinigung des dabei entstehenden Wassers, und ein Ultrafiltrationsmodul.

Ein Ausführungsbeispiel der Erfindung wird nachstehend anhand der beigefügten Zeichnung im einzelnen erläutert. In der Zeichnung zeigt
- Fig. 1: ein Schema einer Vorrichtung zur Kompostierung organischer Stoffe,
- Fig. 2: den Verlauf der Kondensatabwassermenge über der Zeit und
- Fig. 3: die Kondensatzusammensetzung in Abhängigkeit von der Rottezeit.

In dem Behälter (Aerobfermenter) 1 werden organische Abfälle bzw. Abfälle, die organische Bestandteile enthalten, kompostiert. Es handelt sich um einen geschlossenen Behälter, der zwangsbelüftet wird. Die Abluft wird einer Abluftreinigungsanlage 2 zugeführt, in der die Abluft abgekühlt wird, so daß das in der Abluft befindliche Wasser auskondensiert. Das Kondensat 3 wird einem -Bioreaktor 4 zugeführt, in dem die in dem Wasser bzw. Kondensat enthaltenen Inhaltsstoffe biologisch abgebaut werden. Das Wasser bzw. Kondensat wird in dem Bioreaktor 4 also gereinigt.

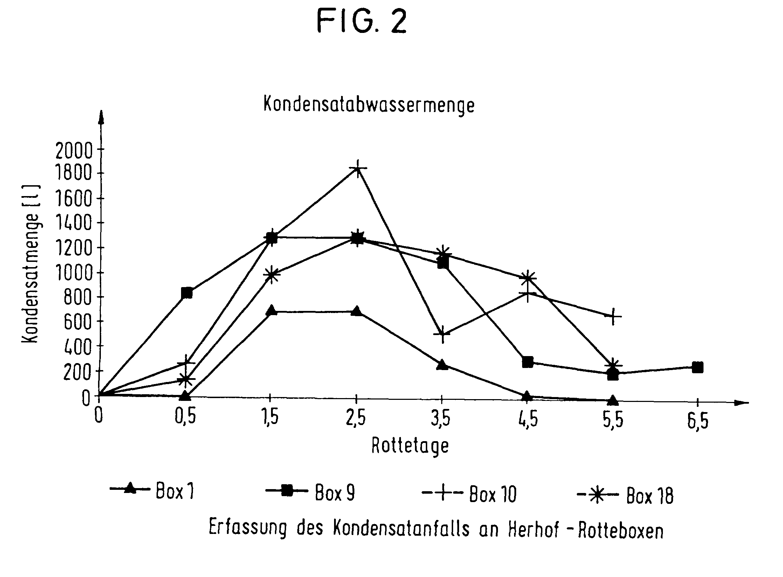

Die dem Bioreaktor zufließenden Wassermengen sind abhängig von der Stoffwechselintensität des in dem Behälter 1 befindlichen Rottegemisches. Diese Wassermengen können beispielhaft der Fig. 2 entnommen werden. In der Fig. 2 sind die Kondensatabwassermengen, also die Mengen des kondensierten Wassers, das in der Abluftreinigungsanlage entsteht und das dem Bioreaktor zugeführt wird, in Abhängigkeit von der Zeit dargestellt. Wie aus Fig. 2 ersichtlich, schwankt die Kondensatabwassermenge im Verlauf des Rotteprozesses. Sie steigt zunächst an, bis sie nach etwa 1,5 bis 2,5 Rottetagen ihr Maximum erreicht, und sinkt dann wieder ab, wobei in bestimmten Fällen auch ein erneuter Anstieg möglich ist. Nach etwa 6,5 Rottetagen ist der Rotteprozeß beendet. Wie aus Fig. 2 ersichtlich, liegt das Maximum der Kondensatabwassermenge im gewählten Beispiel im Bereich von 800 bis 1.800 Liter. In der Fig. 2 sind vier Kurvenverläufe dargestellt, wobei eine Kurve jeweils zu einem bestimmten Rottebehälter gehört.

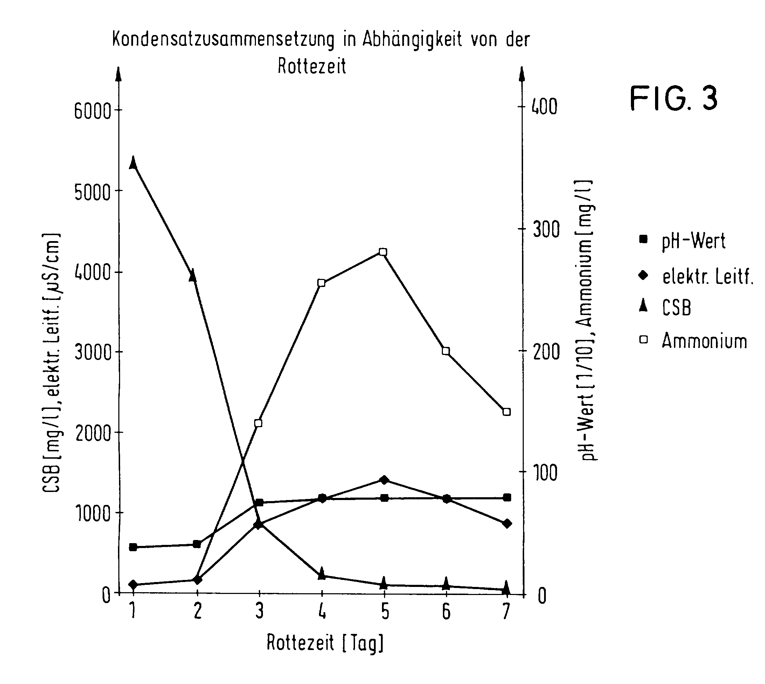

Die Wasserinhaltsstoffe des Kondensats sind in der Fig. 3 in Abhängigkeit von der Zeit dargestellt. Aufgetragen sind der CSB-Wert in mg/l, die elektrische Leitfähigkeit in µS/cm, der pH-Wert und die Ammonium-Konzentration in mg/l. Der CSB-Wert wird durch die Dreiecke repräsentiert, die elektrische Leitfähigkeit durch die auf der Spitze stehenden Quadrate, der pH-Wert durch die ausgefüllten (schwarzen) Quadrate und die Ammonium-Konzentration durch die leeren (weißen) Quadrate. Der CSB-Wert ist zu Beginn des Kompostierungsprozesses am größten und sinkt dann ab. Die elektrische Leitfähigkeit ist zunächst gering. Sie erreicht nach etwa fünf Rottetagen ein Maximum und fällt dann wieder ab. Der pH-Wert steigt über die gesamte Rottezeit langsam an. Die Ammonium-Konzentration ist zunächst gering. Sie steigt an und erreicht nach etwa vier bis fünf Rottetagen ein Maximum. Danach fällt sie wieder ab.

Die Flüssigkeit bzw. das Wasser in dem Bioreaktor 4 wird mit Sauerstoff, vorzugsweise mit Luftsauerstoff, begast und umgerührt. Hierdurch findet eine biologisch-mechanische Reinigung statt. Das Wasser wird ferner durch eine Pumpe 5 einem Ultrafiltrationsmodul 6 zugeführt und dort ultrafiltriert. In dem Ultrafiltrationsmodul 6 befindet sich ein Membranfilter. Das über das Membranfilter gereinigte Wasser, also das Permeat, wird einem Sammelbehälter (Pufferbehälter) 7 zugeführt, dem es anschließend zum Verbrauch entnommen werden kann. Das Retentat wird über die Leitung 8 in den Bioreaktor zurückgeführt.

Die Steuerung der Stoffwechselfunktionen im -Bioreaktor 4 erfolgt durch Nährstoffeintragung, und zusätzlich durch Sauerstoffeintragung, insbesondere Luftsauerstoffeintragung, durch pH-Wert-Regelung und durch Temperaturregelung. Die aufgrund des Sauerstoffeintrags entstehende Abluft wird über die Leitung 9 in den Lüftungskreislauf der Kompostierung zur Nachreinigung zurückgeführt. Die Leitung 9 führt also zum Behälter 1.

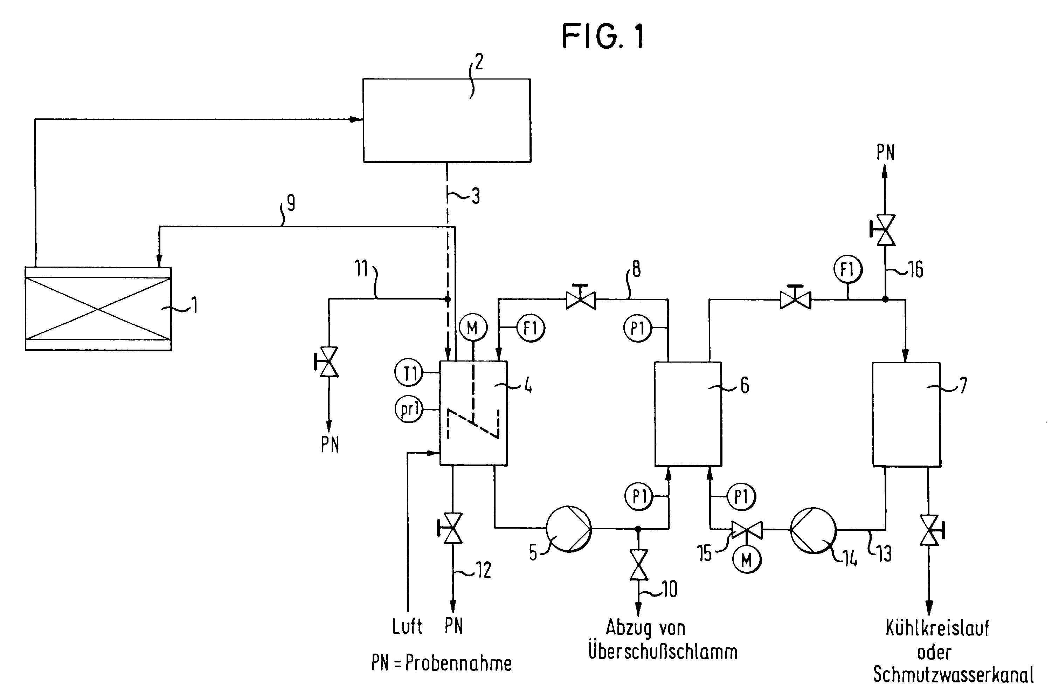

Die Steuerung der Membranfilterleistung, also der Leistung des Ultrafiltrationsmoduls 6, erfolgt über Druckregelung und Regelung der Überströmgeschwindigkeit. Der sich im System ansammelnde Überschußschlamm wird von Zeit zu Zeit ausgeschleust und über die Leitung 10 dem zu kompostierenden Rottegemisch zugeführt. Die Leitung 10 führt also (in der Fig. 1 nicht dargestellt) ebenfalls zu dem Behälter 1.

Wie aus Fig. 1 ersichtlich, ist eine durch ein Ventil aufsteuerbare Leitung 11 vorgesehen, die von der Kondensatleitung 3 abzweigt und durch die einen Kondensatprobe entnommen werden kann. Ferner ist eine durch ein Ventil aufsteuerbare Leitung 12 vorgesehen, durch die dem Bioreaktor 4 eine Wasserprobe entnommen werden kann. Von dem Sammelbehälter 7 führt eine Leitung 13 zu dem Ultrafiltrationsmodul 6 zurück, in der sich eine Pumpe 14 befindet sowie ein Absperrhahn 15. Die Leitung 13 dient zur Rückspülung des Ultrafiltrationsmoduls.

Von der Leitung, die von dem Ultrafiltrationsmodul 6 zu dem Sammelbehälter 7 führt, zweigt eine weitere durch einen Schieber aufsteuerbare Leitung 16 ab, durch die eine Probe des aus dem Ultrafiltrationsmodul 6 kommenden Permeats genommen werden kann.

Das in dem Sammelbehälter 7 befindliche Wasser kann durch eine Leitung, die durch einen Schieber aufsteuerbar ist, entnommen werden. Es kann in einen Kühlkreislauf eingeleitet werden oder in einen Schmutzwasserkanal.

Die den Sauerstoffbedarf kennzeichnenden Inhaltsstoffe des Kondensats 3 sind exakt meßbar. Die Erfindung geht aus von der auf Justus von Liebig zurückgehenden Erkenntnis, daß der im "Minimum befindliche Nährstoff den Ertrag bestimmt". Auf die vorliegende Erfindung bezogen bedeutet dies, daß die Zusammensetzung des Kondensates derart verändert werden muß, daß ein biologischer Klärprozeß möglich ist, d.h. daß durch die Steuerung des Ertrages von Biomasse eine Festlegung der abzuscheidenden Wasserinhaltsstoffe erfolgt. Diese werden somit zunächst festgelegt und dann aus dem Wasser ausgefiltert. Die Festlegung der den CSB-Wert bzw. den BSB-Wert bestimmenden Wasserinhaltsstoffe in Mikroorganismen wird dadurch gesteuert, daß man durch Animpfen des Kondensates den Verlauf der Stoffwechselfunktionen der eingebrachten Mikroorganismen feststellt. Danach werden die einzelnen Substratparameter (z.B. Sauerstoff, Kohlenstoff, Stickstoff, Phosphor, pH-Wert, Temperatur) und die daraus resultierenden Änderungen der Stoffwechselfunktionen ermittelt. Da die im Minimum befindliche Nährstoffgröße den Ertrag bestimmt, darf angenommen werden, daß diese These erweitert werden kann auf die den Ertrag bestimmende "Wachstumsgröße", d.h. "Substratparametergröße". Die praktische Umsetzung erfolgt durch regelungstechnische Funktionen. Da der Zufluß von Nährstoffen in eine Biozönose auch eine Ausschleusung von sich bildender Biomasse erfordert, wird durch Membranfiltration immer so viel Biomasse zurückgehalten, wie zur Aufrechterhaltung optimaler Stoffwechselfunktionen erforderlich ist. Diese Biomasse wird in die Biologie, also in den -Bioreaktor, zurückgeführt.

Mit der im Ausführungsbeispiel beschriebenen Verfahrensweise ist es möglich, die Wasserqualität so zu verbessern, daß das Kondensat aus biologischen Prozessen als Brauchwasser für offene Verdunstungskreisläufe (z.B. Kühlung der Abluft aus biologischen Prozessen) verwendet werden kann.

## Patentansprüche

1. Verfahren zur Kompostierung organischer Stoffe, insbesondere Abfälle, die organische Stoffe enthalten,
bei dem die organischen Stoffe kompostiert werden,
bei dem das dabei als Kondensat entstehende Wasser in einem Bioreaktor (4) biologisch gereinigt wird, wobei das Wasser mit Sauerstoff, vorzugsweise Luftsauerstoff, begast wird, wobei die aus dem Wasser abzuschneidenden Wasser-Inhaltsstoffe in Mikroorganismen festgelegt werden
bei dem das derart gereinigte Wasser ultrafiltriert (6) und das Retentat in den Bioreaktor (4) zurückgeführt wird,
wobei die den Sauerstoffbedarf bestimmenden Inhaltsstoffe des zu reinigenden Wassers gemessen werden,
und wobei die Steuerung der Stoffwechselfunktionen im Bioreaktor durch Nährstoffeintragung erfolgt.

2. Verfahren nach Anspruch 1, dadurch gekennzeichnet, daß die Steuerung der Stoffwechselfunktionen zusätzlich durch Sauerstoffeintrag, insbesondere Luftsauerstoffeintrag, und/oder durch pH-Wert-Regelung und/oder durch Temperaturregelung erfolgt.

3. Verfahren nach Anspruch 1 oder 2, dadurch gekennzeichnet, daß das Wasser in dem Bioreaktor (4) umgerührt wird.

4. Verfahren nach einem der vorhergehenden Ansprüche, dadurch gekennzeichnet, daß durch Membranfiltration immer so viel Biomasse zurückgehalten wird, wie zur Aufrechterhaltung optimaler Stoffwechselfunktionen erforderlich ist, wobei diese Biomasse in den Bioreaktor (4) zurückgeführt wird.

5. Verfahren nach einem der vorhergehenden Ansprüche, dadurch gekennzeichnet, daß man durch Animpfen des zu reinigenden Wassers den Verlauf der Stoffwechselfunktionen der eingebrachten Mikroorganismen feststellt.

6. Verfahren nach einem der vorhergehenden Ansprüche, dadurch gekennzeichnet, daß die festgelegten Wasserinhaltsstoffe aus dem Wasser ausgefiltert werden.

7. Verfahren nach einem der vorhergehenden Ansprüche, dadurch gekennzeichnet, daß die Steuerung der Filterleistung, insbesondere der Membranfilterleistung, durch Druckregelung und/oder Regelung der Überströmgeschwindigkeit erfolgt.

8. Verfahren nach einem der vorhergehenden Ansprüche, dadurch gekennzeichnet, daß die Abluft des Bioreaktors in den Lüftungskreislauf der Kompostierung zurückgeführt wird.

9. Verfahren nach einem der vorhergehenden Ansprüche, dadurch gekennzeichnet, daß der sich ansammelnde Überschußschlamm kompostiert wird, insbesondere mit den zu kompostierenden organischen Stoffen.

10. Vorrichtung zur Durchführung des Verfahrens nach einem der vorhergehenden Ansprüche,
gekennzeichnet durch
einen Behälter (1), insbesondere einen geschlossenen Behälter mit Zwangsbelüftung, zur Kompostierung organischer Stoffe,
einen Bioreaktor (4) zum Reinigen des bei der Kompostierung als Kondensat entstehenden Wassers durch Begasung mit Sauerstoff, vorzugsweise Luftsauerstoff, und zum Festlegen der aus dem Wasser abzuschneidenden Wasser-Inhaltsstoffe
ein Ultrafiltrationsmodul (6) zum Ultrafiltrieren des derart gereinigten Wassers,
eine Leitung (8) zum Zurückführen des Retentats aus dem Ultrafiltrationsmodul (6) in den Bioreaktor (4),
eine Einrichtung zum Messen der den Sauerstoffbedarf bestimmenden Inhaltsstoffe des zu reinigenden Wassers,und
eine Einrichtung zur Steuerung der Stoffwechselfunktionen im Bioreaktor (4) durch Nährstoffeintragung.

11. Vorrichtung nach Anspruch 10, gekennzeichnet durch eine Einrichtung zur Steuerung der Stoffwechselfunktionen im Bioreaktor (4) durch Sauerstoffeintrag, insbesondere Luftsauerstoffeintrag, und/oder durch pH-Wert-Regelung und/oder durch Temperaturregelung.

12. Vorrichtung nach Anspruch 10 oder 11, dadurch gekennzeichnet, daß der Bioreaktor (4) eine Einrichtung zum Umrühren des Wassers aufweist.

13. Vorrichtung nach einem der Ansprüche 10 bis 12, gekennzeichnet durch eine Leitung (9) von dem Bioreaktor (4) zu dem Behälter (1) zum Zurückführen der Abluft aus dem Bioreaktor (4) in den Lüftungskreislauf des Behälters (1).

14. Vorrichtung nach einem der Ansprüche 10 bis 13, gekennzeichnet durch eine Leitung (10) zum Ausschleusen des Überschußschlamms und zum Zuführen des Überschußschlamms zu dem Behälter (1).

## Claims

1. Process for composting organic substances, in particular wastes which comprise organic substances,
in which the organic substances are composted,
in which the water thus produced as condensate is biologically purified in a bioreactor (4), the water being treated with oxygen gas, preferably atmospheric oxygen, the water constituents to be separated off from the water being fixed in microorganisms,
in which the thus purified water is ultrafiltered (6) and the retentate recirculated to the bioreactor (4),
the constituents of the water to be purified which determine the oxygen demand being measured, and the metabolic functions in the bioreactor being controlled by nutrient input.

2. Process according to Claim 1, characterized in that the metabolic functions are additionally controlled by oxygen input, in particular atmospheric oxygen input, and/or by pH regulation and/or by temperature regulation.

3. Process according to Claim 1 or 2, characterized in that the water in the bioreactor (4) is agitated.

4. Process according to one of the preceding claims, characterized in that, by membrane filtration, as much biomass is always retained as is required to maintain optimum metabolic functions, this biomass being recirculated to the bioreactor (4).

5. Process according to one of the preceding claims, characterized in that, by inoculating the water to be purified, the course of the metabolic functions of the microorganisms introduced is established.

6. Process according to one of the preceding claims, characterized in that the water constituents which have been determined are filtered out of the water.

7. Process according to one of the preceding claims, characterized in that the filter efficiency, in particular the membrane filter efficiency, is controlled by pressure regulation and/or regulating the overflow velocity.

8. Process according to one of the preceding claims, characterized in that the exhaust air of the bioreactor is recirculated to the composting aeration circuit.

9. Process according to one of the preceding claims, characterized in that the collecting excess sludge is composted, in particular together with the organic substances to be composted.

10. Apparatus for carrying out the process according to one of the preceding claims, characterized by a vessel (1), in particular a closed vessel having forced aeration, for composting organic substances,
a bioreactor (4) for purifying by treatment with oxygen, preferably atmospheric oxygen, the water produced during composting as condensate, and for determining the water constituents to be separated off from the water,
an ultrafiltration module (6) for ultrafiltering the water purified in this manner,
a line (8) for recirculating the retentate from the ultrafiltration module (6) to the bioreactor (4),
a device for measuring the constituents of the water to be purified which determine the oxygen demand, and
a device for controlling the metabolic functions in the bioreactor (4) by nutrient input.

11. Apparatus according to Claim 10, characterized by a device for controlling the metabolic functions in the bioreactor (4) by oxygen input, in particular atmospheric oxygen input, and/or by pH regulation and/or by temperature regulation.

12. Apparatus according to Claim 10 or 11, characterized in that the bioreactor (4) has a device for agitating the water.

13. Apparatus according to one of Claims 10 to 12, characterized by a line (9) from the bioreactor (4) to the vessel (1) for recirculating the exhaust air from the bioreactor (4) to the aeration circuit of the vessel (1).

14. Apparatus according to one of Claims 10 to 13, characterized by a line (10) for discharging the excess sludge and for feeding the excess sludge to the vessel (1).

## Revendications

1. Procédé de compostage de matières organiques, notamment de déchets qui contiennent des matières organiques,
où les matières organiques sont compostées,
où l'eau ainsi produite comme condensat est purifiée biologiquement dans un bio-réacteur (4), où l'eau est gazé avec de l'oxygène, de préférence de l'oxygène d'air,
où des matières contenues dans l'eau, à éliminer de l'eau, sont fixées dans des micro-organismes,
où l'eau ainsi purifiée est soumise à une ultra-filtration (6), et le produit retenu est ramené dans le bio-réacteur (4),
où les matières déterminant le besoin en oxygène, de l'eau à purifier, sont mesurées et
où la commande des fonctions de métabolisme a lieu dans le bio-réacteur par une introduction de substances nutritives.

2. Procédé selon la revendication 1, caractérisé en ce que la commande des fonctions de métabolisme a lieu additionnellement par une introduction d'oxygène, notamment une introduction d'oxygène d'air et/ou par le réglage de la valeur pH et/ou le réglage de la température.

3. Procédé selon la revendication 1 ou 2, caractérisé en ce que l'eau est agitée dans le bio-réacteur (4).

4. Procédé selon l'une des revendications précédentes, caractérisé en ce que par la filtration à membrane, il est retenu toujours autant de biomasse que nécessaire pour le maintien de fonctions de métabolisme optimales, où cette biomasse est ramenée dans le bio-réacteur (4).

5. Procédé selon l'une des revendications précédentes, caractérisé en ce qu'on constate par une prise de l'eau à purifier l'allure des fonctions de métabolisme des micro-organismes introduits.

6. Procédé selon l'une des revendications précédentes, caractérisé en ce que les matières déterminées dans l'eau sont éliminées de l'eau par filtration.

7. Procédé selon l'une des revendications précédentes, caractérisé en ce que la commande de la performance du filtre, notamment de la performance du filtre à membrane, a lieu par un réglage de la pression et/ou un réglage de la vitesse de débordement.

8. Procédé selon l'une des revendications précédentes, caractérisé en ce que l'air d'échappement du bio-réacteur est reconduit dans le circuit d'aération du compostage.

9. Procédé selon l'une des revendications précédentes, caractérisé en ce que la boue excédentaire accumulée est compostée, notamment avec les matières organiques à composter.

10. Dispositif pour la mise en oeuvre du procédé selon l'une des revendications précédentes, caractérisé par
un récipient (1), notamment un récipient fermé avec aération forcée, pour le compostage de matières organiques,
un bio-réacteur (4) pour purifier l'eau produite lors du compostage comme condensat par une gazéification avec de l'oxygène, de préférence de l'oxygène d'air et pour la détermination des matières contenues dans l'eau, à éliminer de l'eau et
un module d'ultra-filtration (6) pour l'ultra-filtration de l'eau ainsi purifiée,
un conduit (8) pour amener le produit retenu du module d'ultra-filtration (6) dans le bio-réacteur (4),
une installation pour mesurer les matières contenues déterminant le besoin en oxygène de l'eau à purifier et
une installation pour commander les fonctions de métabolisme dans le bio-réacteur (4) par une introduction de substances nutritives.

11. Dispositif selon la revendication 10, caractérisé par une installation de commande des fonctions de métabolisme dans le bio-réacteur (4) par une introduction d'oxygène, notamment une introduction d'oxygène d'air et/ou par un réglage de la valeur pH et/ou par un réglage de la température.

12. Dispositif selon la revendication 10 ou 11, caractérisé en ce que le bio-réacteur (4) présente une installation pour agiter l'eau.

13. Dispositif selon l'une des revendications 10 à 12, caractérisé par un conduit (9) menant du bio-réacteur (4) au récipient (1) pour ramener l'air d'échappement du bio-réacteur (4) dans le circuit d'aération du récipient (1).

14. Dispositif selon l'une des revendications 10 à 13, caractérisé par un conduit (10) pour écluser les boues excédentaires et pour amener les boues excédentaires au récipient (1).
